(19) Europäisches Patentamt
European Patent Office
Office européen des brevets

(11) **EP 4 746 317 A1**

(12) **EUROPEAN PATENT APPLICATION**
published in accordance with Art. 153(4) EPC

(43) Date of publication:
**20.05.2026 Bulletin 2026/21**

(21) Application number: **24881188.7**

(22) Date of filing: **12.08.2024**

(51) International Patent Classification (IPC):
***H04B 13/00*** (2006.01)

(52) Cooperative Patent Classification (CPC):
**H04B 13/00**

(86) International application number:
**PCT/CN2024/111409**

(87) International publication number:
**WO 2025/086819 (01.05.2025 Gazette 2025/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.10.2023 CN 202311426306**

(71) Applicant: **Honor Device Co., Ltd.
Shenzhen, Guangdong 518040 (CN)**

(72) Inventors:
• **JIANG, Cheng
  Shenzhen, Guangdong 518040 (CN)**
• **LIU, Dongping
  Shenzhen, Guangdong 518040 (CN)**
• **ZHANG, Bo
  Shenzhen, Guangdong 518040 (CN)**
• **CAI, Juan
  Shenzhen, Guangdong 518040 (CN)**

(74) Representative: **Epping - Hermann - Fischer
Patentanwaltsgesellschaft mbH
Schloßschmidstraße 5
80639 München (DE)**

(54) **HUMAN BODY COMMUNICATION DEVICE, SYSTEM AND CONTROL METHOD**

(57)     This application discloses a human body communication apparatus and system and a control method, where the human body communication apparatus includes: a human body communication chip, a first electrode, a second electrode, and a dielectric. The human body communication chip is electrically connected to the first electrode and the second electrode separately, and the dielectric is disposed on a side that is of the first electrode and that is away from the second electrode. The first electrode is not electrically connected to a human body, and the second electrode is configured to be electrically connected to the human body.

FIG. 12

## Description

This application claims priority to Chinese Patent Application No. 202311426306.9, filed with the China National Intellectual Property Administration on October 27, 2023 and entitled "HUMAN BODY COMMUNICATION APPARATUS AND SYSTEM AND CONTROL METHOD", which is incorporated herein by reference in its entirety.

## TECHNICAL FIELD

This application relates to the field of human body communication, and in particular, to a human body communication apparatus and system and a control method.

## BACKGROUND

A human body communication apparatus includes an electrode that is electrically connected to a human body and an electrode that is not electrically connected to the human body, and the human body communication apparatus performs human body communication through the two electrodes. Usually, a larger area of the electrode that is not electrically connected to the human body indicates a larger equivalent capacitance between the electrode and a ground terminal, and better human body communication performance. However, for some human body communication apparatuses (such as a mobile phone), a limited internal space limits an increase of an area of the electrode, and therefore human body communication performance is poor.

## SUMMARY

Embodiments of this application provide a human body communication apparatus and system and a control method, to increase an equivalent capacitance between an electrode that is not electrically connected to a human body in the human body communication apparatus and a ground terminal, thereby improving human body communication performance.

To achieve the foregoing objective, the following technical solutions are used in the embodiments of this application.

According to a first aspect, a human body communication apparatus is provided, including: a human body communication chip, a first electrode, a second electrode, and a dielectric. The human body communication chip is electrically connected to the first electrode and the second electrode separately, and the dielectric is disposed on a side that is of the first electrode and that is away from the second electrode. The first electrode is not electrically connected to a human body, and the second electrode is configured to be electrically connected to the human body.

The human body communication apparatus provided in this embodiment of this application includes the first electrode that is not electrically connected to the human body and the second electrode that is electrically connected to the human body. An equivalent capacitance between the first electrode and a ground terminal is increased by adding the dielectric on the side that is of the first electrode and that is away from the second electrode, thereby improving human body communication performance.

In a possible implementation, the human body communication apparatus further includes a processor and a multi-way switch. There are a plurality of first electrodes, and the plurality of first electrodes are electrically connected in parallel to the human body communication chip by using the multi-way switch; and the human body communication chip or the processor is configured to control the multi-way switch to conductively connect the human body communication chip to at least one of the plurality of first electrodes. The plurality of first electrodes that are not electrically connected to the human body are electrically connected to the human body communication chip by using the multi-way switch. The human body communication chip or the processor may control the multi-way switch to disconnect a first electrode that is in the plurality of first electrodes and that is greatly affected due to proximity to the human body, to prevent the first electrode from affecting other first electrodes, thereby preventing human body communication performance from being degraded when the human body is close to an electrode that is not electrically connected to the human body in the human body communication apparatus.

In a possible implementation, the human body communication chip or the processor is specifically configured to: detect a human body communication abnormality; and control the multi-way switch to separately disconnect electrical connections between the human body communication chip and the first electrodes, where when an electrical connection between the human body communication chip and a target first electrode is disconnected, the electrical connection between the human body communication chip and the target first electrode is kept disconnected if a human body communication improvement is detected, or the electrical connection between the human body communication chip and the target first electrode is restored if no human body communication improvement is detected. This implementation discloses how to determine the first electrode that is greatly affected by the human body, and disconnect an electrical connection between the human body communication chip and the first electrode.

In a possible implementation, the human body communication abnormality includes: human body communication is disconnected; or an average power of an alternating current signal received by the human body communication chip in a first time period is a first power, an average power of an alternating current signal received by the human body communication chip in a subsequent second time period is a second power, and a difference between the first power and the second power is greater than a first threshold. That is, no alternating current signal can be received by the human body communication chip, or signal attenuation of the human body communication increases by a specific magnitude.

In a possible implementation, the human body communication improvement includes: the human body communication is restored; or an average power of an alternating current signal received by the human body communication chip in a third time period is a third power, an average power of an alternating current signal received by the human body communication chip in a subsequent fourth time period is a fourth power, and a difference between the fourth power and the third power is greater than a second threshold. That is, an alternating current signal is received again by the human body communication chip, or signal attenuation of the human body communication decreases by a specific magnitude.

In a possible implementation, the plurality of first electrodes are located in different regions of the human body communication apparatus. In this way, the plurality of first electrodes can be prevented from being simultaneously affected by the human body, and therefore human body communication performance can be prevented from being degraded.

In a possible implementation, the dielectric is a back case of the human body communication apparatus, and the first electrode is disposed on an inner side of the back case. For the human body communication apparatus such as a mobile phone, the back case is inherent, and an additionally disposed dielectric does not need to be added, so that an internal space can be saved. In addition, compared with directly exposing the first electrode to the outside for contact with the human body, disposing the first electrode on the inner side of the back case may prevent a huge transmission loss.

In a possible implementation, the dielectric is made of one of the following materials: alumina ceramic, zirconia ceramic, polytetrafluoroethylene, and polyimide. The foregoing high dielectric constant materials are not limited in this application.

In a possible implementation, a dielectric constant of the dielectric is greater than 4. Dielectric constants of the foregoing high dielectric constant materials are not limited in this application.

In a possible implementation, an area of the dielectric is greater than an area of the first electrode. Within a specific range, a larger area of the dielectric indicates a larger equivalent capacitance between the first electrode and the ground terminal.

In a possible implementation, the first electrode is an antenna branch or the first electrode is a metal component of a camera module. For the human body communication apparatus such as the mobile phone, the antenna branch or the camera module is inherent, and therefore no additional metal component is added, so that the internal space and material costs can be saved.

In a possible implementation, the second electrode is a metal middle frame of the human body communication apparatus. For the human body communication apparatus such as the mobile phone, the metal middle frame is inherent, and an additionally disposed metal component does not need to be added, so that the internal space can be saved.

According to a second aspect, a human body communication apparatus is provided, including: a processor, a human body communication chip, a multi-way switch, a second electrode, and a plurality of first electrodes. The plurality of first electrodes are electrically connected in parallel to the human body communication chip by using the multi-way switch, and the human body communication chip is further electrically connected to the second electrode. The plurality of first electrodes are not electrically connected to a human body, and the second electrode is configured to be electrically connected to the human body. The human body communication chip or the processor is configured to control the multi-way switch to conductively connect the human body communication chip to at least one of the plurality of first electrodes.

In the human body communication apparatus provided in this embodiment of this application, the plurality of first electrodes that are not electrically connected to the human body are electrically connected to the human body communication chip by using the multi-way switch. The human body communication chip or the processor may control the multi-way switch to disconnect a first electrode that is in the plurality of first electrodes and that is greatly affected due to proximity to the human body, to prevent the first electrode from affecting other first electrodes, thereby preventing human body communication performance from being degraded when the human body is close to an electrode that is not electrically connected to the human body in the human body communication apparatus.

In a possible implementation, the human body communication chip or the processor is specifically configured to: detect a human body communication abnormality; and control the multi-way switch to separately disconnect electrical connections between the human body communication chip and the first electrodes, where when an electrical connection between the human body communication chip and a target first electrode is disconnected, the electrical connection between the human body communication chip and the target first electrode is kept disconnected if a human body communication improvement is detected, or the electrical connection between the human body communication chip and the target first electrode is restored if no human body communication improvement is detected; and the first electrode is not electrically connected to the human body. This implementation discloses how to determine the first electrode that is greatly affected by the human body, and disconnect an electrical connection between the human body communication chip and the first electrode.

In a possible implementation, the human body communication abnormality includes: human body communication is disconnected; or an average power of an alternating current signal received by the human body communication chip in a first time period is a first power, an average power of an alternating current signal received by the human body communication chip in a subsequent second time period is a second power, and a difference between the first power and the second power is greater than a first threshold.

In a possible implementation, the human body communication improvement includes: the human body communication is restored; or an average power of an alternating current signal received by the human body communication chip in a third time period is a third power, an average power of an alternating current signal received by the human body communication chip in a subsequent fourth time period is a fourth power, and a difference between the fourth power and the third power is greater than a second threshold.

In a possible implementation, the plurality of first electrodes are located in different regions of the human body communication apparatus. In this way, the plurality of first electrodes can be prevented from being simultaneously affected by the human body, and therefore human body communication performance can be prevented from being degraded.

In a possible implementation, a side that is of the first electrode and that is away from the second electrode is provided with a dielectric (for example, covering a surface), to increase an equivalent capacitance between the first electrode and a ground terminal. The dielectric is made of a high dielectric constant material, and the high dielectric constant material covering the surface of the first electrode may further improve the equivalent capacitance between the first electrode and the ground terminal, thereby improving the human body communication performance of the human body communication apparatus.

In a possible implementation, the dielectric is a back case of the human body communication apparatus, and the first electrode is disposed on an inner side of the back case. For the human body communication apparatus such as a mobile phone, the back case is inherent, and an additionally disposed dielectric does not need to be added, so that an internal space can be saved. In addition, compared with directly exposing the first electrode to the outside for contact with the human body, disposing the first electrode on the inner side of the back case may prevent a huge transmission loss.

In a possible implementation, the dielectric is made of one of the following materials: alumina ceramic, zirconia ceramic, polytetrafluoroethylene, and polyimide. The foregoing high dielectric constant materials are not limited in this application.

In a possible implementation, a dielectric constant of the dielectric is greater than 4. Dielectric constants of the foregoing high dielectric constant materials are not limited in this application.

In a possible implementation, an area of the dielectric is greater than an area of the first electrode. Within a specific range, a larger area of the dielectric indicates a larger equivalent capacitance between the first electrode and the ground terminal.

In a possible implementation, the first electrode is an antenna branch or the first electrode is a metal component of a camera module. For the human body communication apparatus such as the mobile phone, the antenna branch or the camera module is inherent, and therefore no additional metal component is added, so that the internal space and material costs can be saved.

In a possible implementation, the second electrode is a metal middle frame of the human body communication apparatus. For the human body communication apparatus such as the mobile phone, the metal middle frame is inherent, and an additionally disposed metal component does not need to be added, so that the internal space can be saved.

According to a third aspect, a human body communication system is provided, including a first human body communication apparatus and a second human body communication apparatus, where the first human body communication apparatus and the second human body communication apparatus perform human body communication through a human body, and the first human body communication apparatus or the second human body communication apparatus is the human body communication apparatus according to the first aspect and any implementation thereof.

According to a fourth aspect, a control method for a human body communication apparatus is provided, applied to the human body communication apparatus according to the first aspect or the second aspect and any implementation thereof, and the method includes: detecting a human body communication abnormality; and controlling a multi-way switch to separately disconnect electrical connections between a human body communication chip and first electrodes, where when an electrical connection between the human body communication chip and a target first electrode is disconnected, the electrical connection between the human body communication chip and the target first electrode is kept disconnected if a human body communication improvement is detected, or the electrical connection between the human body communication chip and the target first electrode is restored if no human body communication improvement is detected; and the first electrode is not electrically connected to a human body.

In a possible implementation, the human body communication abnormality includes: human body communication is disconnected; or an average power of an alternating current signal received by the human body communication chip in a first time period is a first power, an average power of an alternating current signal received by the human body communication chip in a subsequent second time period is a second power, and a difference between the first power and the second power is greater than a first threshold.

In a possible implementation, the human body communication improvement includes: the human body communication is restored; or an average power of an alternating current signal received by the human body communication chip in a third time period is a third power, an average power of an alternating current signal received by the human body communication chip in a subsequent fourth time period is a fourth power, and a difference between the fourth power and the third power is greater than a second threshold.

According to a fifth aspect, a computer-readable storage medium is provided, and includes instructions. When the instructions are run on a human body communication apparatus, the human body communication apparatus is enabled to perform the method according to the fourth aspect and any implementation thereof.

According to a sixth aspect, a computer program product including instructions is provided. When the instructions are run on the foregoing human body communication apparatus, the human body communication apparatus is enabled to perform the method according to the fourth aspect and any implementation thereof.

For technical effects of the third aspect to the sixth aspect, refer to technical effects of the first aspect or the second aspect and any implementation thereof, which are not repeated herein.

**BRIEF DESCRIPTION OF DRAWINGS**

FIG. 1 is a schematic diagram of a human body communication scenario according to an embodiment of this application;

FIG. 2 is a schematic diagram of an equivalent circuit of a single electrode according to an embodiment of this application;

FIG. 3 is a schematic diagram of an equivalent circuit of two electrodes according to an embodiment of this application;

FIG. 4 is a schematic diagram of another equivalent circuit of two electrodes according to an embodiment of this application;

FIG. 5 is a schematic diagram of an equivalent circuit of a human body and an electrode according to an embodiment of this application;

FIG. 6 is a schematic diagram of an equivalent circuit and signal attenuation when human body communication cannot be performed between two groups of electrodes according to an embodiment of this application;

FIG. 7 is a schematic diagram of an equivalent circuit and signal attenuation when human body communication can be performed between two groups of electrodes according to an embodiment of this application;

FIG. 8 is a schematic diagram of an impact of adding a dielectric on human body communication performance and signal attenuation according to an embodiment of this application;

FIG. 9 is a schematic diagram shows that adding a dielectric is equivalent to increasing an area of an electrode according to an embodiment of this application;

FIG. 10 is a schematic diagram of a human body communication system according to an embodiment of this application;

FIG. 11 is a schematic diagram of a reason for limiting a size of an electrode in a human body communication apparatus according to an embodiment of this application;

FIG. 12 is a schematic diagram of a human body communication apparatus according to an embodiment of this application;

FIG. 13 is a schematic diagram in which a human body communication apparatus is a mobile phone according to an embodiment of this application;

FIG. 14 is a schematic diagram of a comparison of signal attenuation before and after a dielectric is added according to an embodiment of this application;

FIG. 15 is a schematic diagram of adding a multi-way switch to connect a plurality of first electrodes in parallel according to an embodiment of this application;

FIG. 16 is a schematic diagram of a comparison of signal attenuation before and after a human body is close to a single electrode according to an embodiment of this application;

FIG. 17 is a schematic diagram of another human body communication apparatus according to an embodiment of this application;

FIG. 18 is a schematic diagram of another human body communication apparatus according to an embodiment of this application;

FIG. 19 is a schematic flowchart of a control method for a human body communication apparatus according to an embodiment of this application; and

FIG. 20 is a schematic diagram of a comparison of signal attenuation before and after an affected first electrode is disconnected according to an embodiment of this application.

**DESCRIPTION OF EMBODIMENTS**

First, some concepts in this application are described below.

In embodiments of this application, terms such as "first" and "second" are merely used for distinguishing between features of the same type, and cannot be understood as an indication of relative importance, a quantity, or a sequence.

In embodiments of this application, terms such as "example" or "for example" are used to represent giving an example, an illustration, or a description. Any embodiment or design solution described as "example" or "for example" in this application should not be construed as being preferred or advantageous over other embodiments or design solutions. Exactly, use of the words such as "example" or "for example" is intended to present related concepts in a specific manner.

In embodiments of this application, the term "couple" or "connection" should be understood in a broad sense. For example, the connection may be a physical direct connection, or an indirect connection implemented by an electronic component, such as a connection implemented by a resistor, an inductor, a capacitor, or another electronic component.

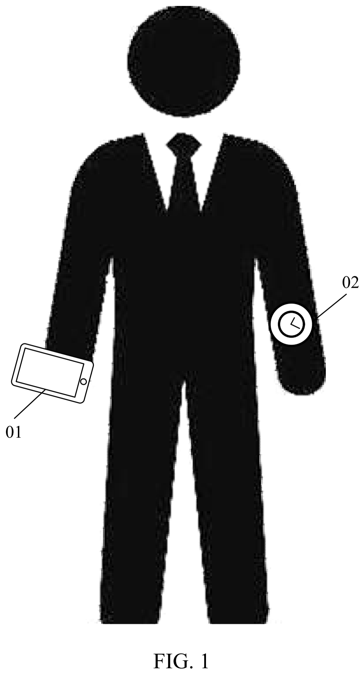

Human body communication: Compared with conventional Bluetooth (bluetooth, BT), wireless fidelity (wireless fidelity, Wi-Fi), and radio frequency (radio frequency, RF), the human body communication transmits a signal through a human body, which is less affected by an electromagnetic environment. Therefore, the human body communication has advantages of a high speed, low power consumption, high confidentiality, less human body damage, and the like. The human body communication may be applied to safe driving, human health care, smart home, data communication between a mobile phone and a smart watch that are held by a single person, data exchange between terminals held by two persons who shake hands with each other, and the like. For example, as shown in FIG. 1, a user holds a mobile phone 01 in one hand, and wears a smart watch 02 on the other hand. The smart watch 02 may send collected information such as heartbeats and a blood pressure to the mobile phone 01 through human body communication, and the mobile phone 01 may also send information such as time and weather to the smart watch 02 through the human body communication.

The human body communication includes two manners: capacitive human body communication and current human body communication. In this application, the capacitive human body communication is used as an example for description. To understand a principle of the capacitive human body communication, first, it should be understood that there are an equivalent capacitance between electrodes, an equivalent capacitance between an electrode and a ground terminal, and an equivalent capacitance between the electrode and a human body.

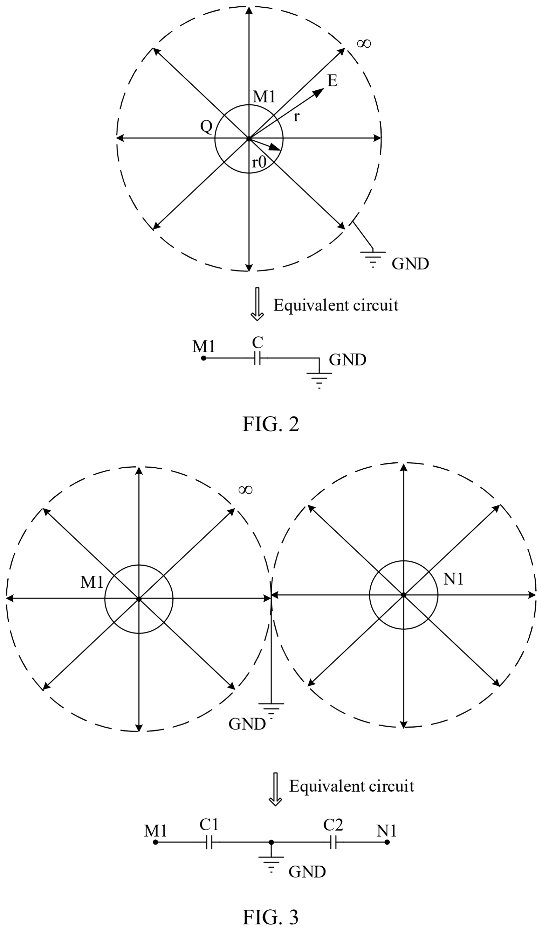

An equivalent circuit of a single electrode in a vacuum is discussed below. As shown in FIG. 2, an electrode M1 is a charged sphere with a radius of r0 and a charge amount of Q, and an electric potential difference between the electrode M1 and a ground terminal GND (the ground terminal GND is theoretically considered to be at an infinite distance $\infty$) is

$$U = \int_{r0}^{\infty} E dr = \int_{r0}^{\infty} \frac{k}{r^2} dr = = \frac{kQ}{r0}$$ , where k is a coefficient, and E is an electric potential. An equivalent circuit of the single electrode M1 in the vacuum is equivalent to that a capacitor C is electrically connected to the ground terminal GND, and a capacitance

$$C = \frac{Q}{U} = \frac{r0}{k} = 4\tau\varepsilon_0 r0 \propto \sqrt{S} \approx \sqrt{4\tau\varepsilon_0^2 S}$$ , where S is a surface area of the charged sphere, and $\varepsilon_0$ is a dielectric constant. That is, an equivalent capacitance C of the single electrode in the vacuum is directly proportional to

$$\sqrt{S}$$ .

Next, an equivalent circuit of two electrodes in a vacuum is discussed. In two scenarios in which the two electrodes are far from each other and close to each other, equivalent circuits of the two electrodes are different.

As shown in FIG. 3, because an electric field range of an electrode is limited, when two electrodes (for example, an electrode M1 and an electrode N1) are away from each other, a mutual impact between electric fields of the two electrodes may be ignored. Therefore, it may be considered that there is a ground terminal GND between the two electrodes, an equivalent circuit of the two electrodes is that a capacitor C1 and a capacitor C2 are connected in series, where the capacitor C1 is an equivalent capacitor between the electrode M1 and the ground terminal GND, and the capacitor C2 is an equivalent capacitor between the electrode N1 and the ground terminal GND. An equivalent capacitance C between the electrode M1 and the electrode N1 in the vacuum satisfies: $$\frac{1}{C} = \frac{1}{C1} + \frac{1}{C2}$$ . In addition, when the electrode M1 and the electrode N1 are extremely away from each other, the capacitance C does not continue to change if a distance between the two electrodes increases. For example, it is assumed that the two electrodes are both charged spheres with a diameter of 5 cm. When the distance between the two electrodes is 0.1 m, the equivalent capacitance C between the two electrodes is 1.87 pF. When the distance between the two electrodes is 0.2 m, the equivalent capacitance C between the two electrodes is 1.59 pF. When the distance between the two electrodes is greater than or equal to 1 m, the equivalent capacitance C between the two electrodes is about 1.44 pF.

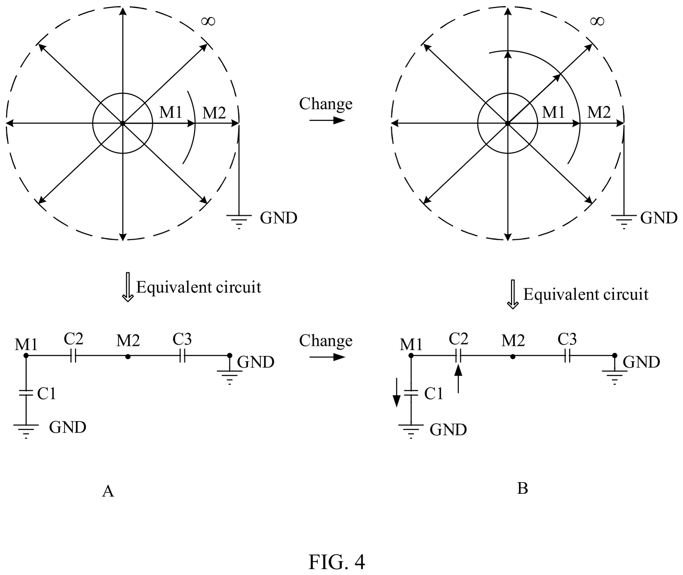

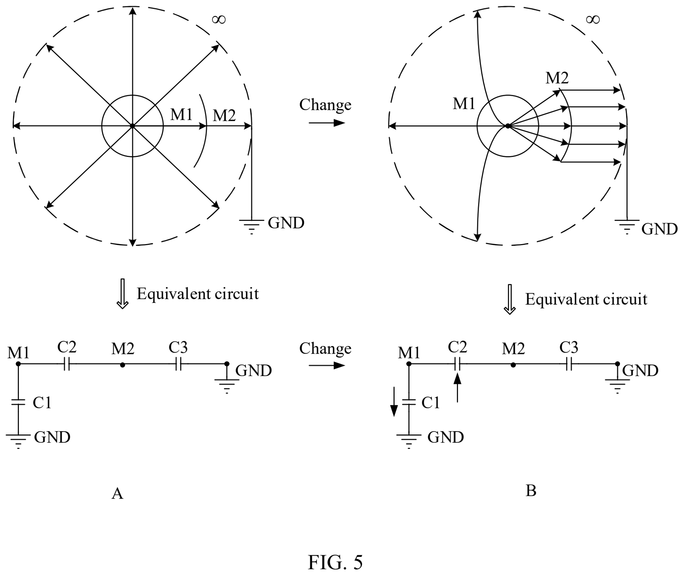

As shown in FIG. 4-FIG. 5, when two electrodes (for example, an electrode M1 and an electrode M2) are close to each other, an equivalent circuit of the two electrodes is that a capacitor C2 and a capacitor C3 are connected in series and then connected in parallel to a capacitor C1, and the capacitor C1 is grounded, where the capacitor C1 is an equivalent capacitor between the electrode M1 and a ground terminal GND, the capacitor C2 is an equivalent capacitor between the electrode M1 and the electrode M2, and the capacitor C3 is an equivalent capacitor between the electrode M2 and the ground terminal GND. With respect to A of FIG. 4, B of FIG. 4 shows that if a surface area of the electrode M2 increases, a capacitance C1 decreases, and an equivalent capacitance C2 between the electrode M2 and the electrode M1 increases. With respect to A of FIG. 5, B of FIG. 5 shows that if a distance between the electrode M2 and the electrode M1 decreases, a capacitance C1 decreases and a capacitance C2 increases. It should be noted that a human body is also a conductor. When the human body replaces the electrode M2 or when the human body and the electrode M2 are equivalent to a conductor when being in contact, the human body is equivalent to the electrode M2.

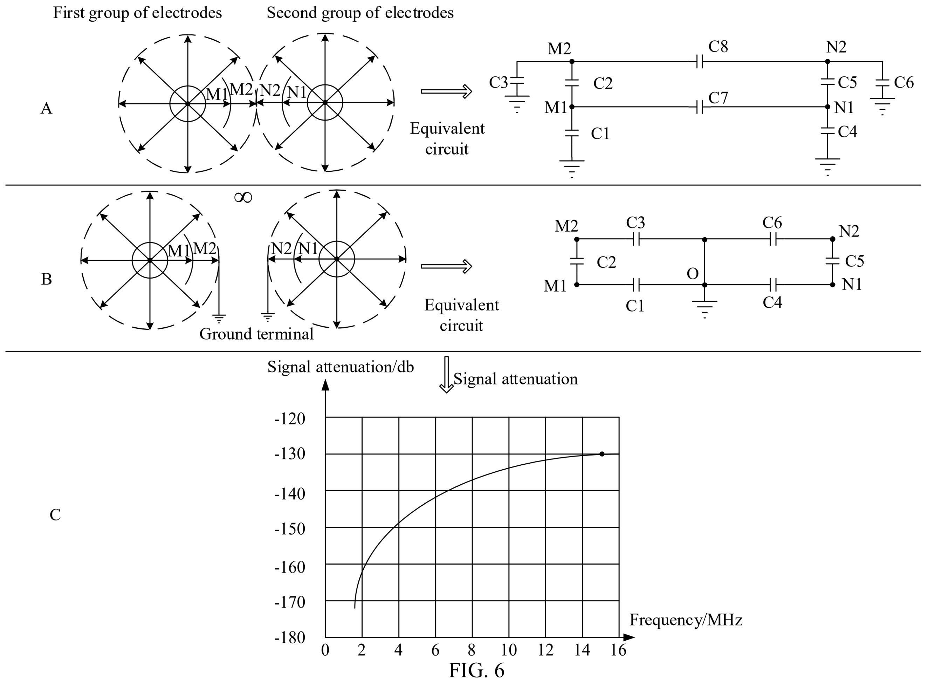

Based on FIG. 3-FIG. 5, as shown in FIG. 6, it is assumed that there are two groups of electrodes, and each group of electrodes includes two electrodes that are close to each other. For example, a first group of electrodes includes an electrode M1 and an electrode M2, and a second group of electrodes includes an electrode N1 and an electrode N2. A relationship between the electrode M1 and the electrode M2 and a relationship between the electrode N1 and the electrode N2 are similar to a relationship between the electrode M1 and the electrode M2 in FIG. 4-FIG. 5. A relationship between the electrode M1 and the electrode N1 and a relationship between the electrode M2 and the electrode N2 are similar to a relationship between the electrode M1 and the electrode N1 in FIG. 3, or are similar to a relationship between the electrode M1 and the electrode M2 in FIG. 4-FIG. 5. The two groups of electrodes are not electrically connected to a human body. Therefore, regardless of a distance between the two groups of electrodes (A of FIG. 6 shows that the two groups of electrodes are close to each other, and B of FIG. 6 shows that the two groups of electrodes are away from each other), communication between the two groups of electrodes cannot be performed. To be specific, if an alternating current signal is applied between the first group of electrodes (the electrode M1 and the electrode M2), it is difficult to detect the alternating current signal between the second group of electrodes (the electrode N1 and the electrode N2); or if an alternating current signal is applied between the second group of electrodes (the electrode N1 and the electrode N2), it is difficult to detect the alternating current signal between the first group of electrodes (the electrode M1 and the electrode M2). The reason is as follows: For example, as shown in C of FIG. 6, after simulation, when a frequency of an alternating current signal is 15 MHz, and when neither of the two groups of electrodes is electrically connected to the human body, signal attenuation of the alternating current signal transmitted between the two groups of electrodes is -130 db, which exceeds a detection capability of common hardware for the alternating current signal.

It should be noted that in FIG. 6, a capacitor C1 is an equivalent capacitor between the electrode M1 and a ground terminal GND, a capacitor C2 is an equivalent capacitor between the electrode M1 and the electrode M2, a capacitor C3 is an equivalent capacitor between the electrode M2 and the ground terminal GND, a capacitor C4 is an equivalent capacitor between the electrode N1 and the ground terminal GND, a capacitor C5 is an equivalent capacitor between the electrode N1 and the electrode N2, a capacitor C6 is an equivalent capacitor between the electrode N2 and the ground terminal GND, a capacitor C7 is an equivalent capacitor between the electrode M1 and the electrode N1, and a capacitor C8 is an equivalent capacitor between the electrode M2 and the electrode N2.

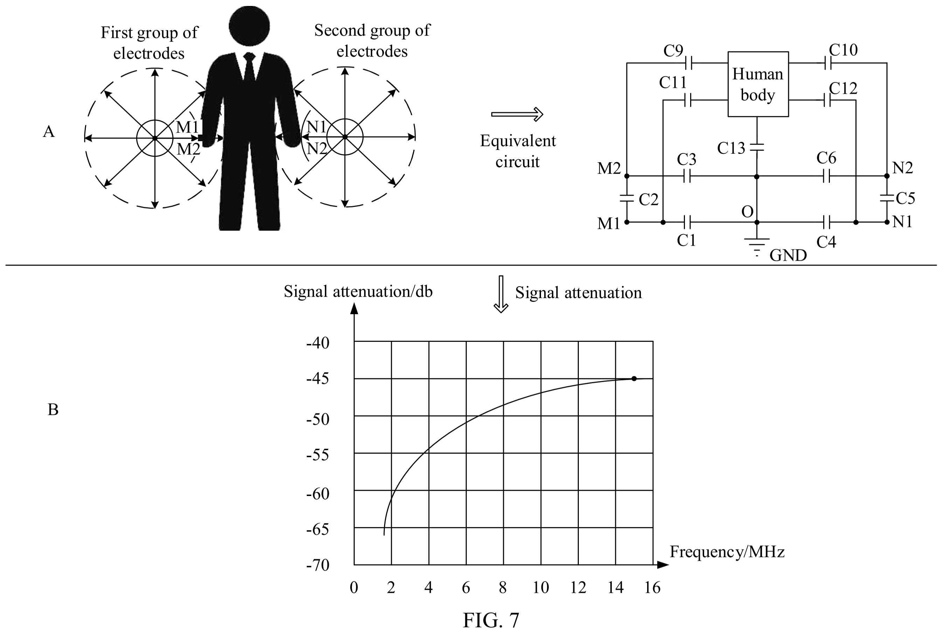

However, if one electrode is taken from each of the two groups of electrodes to be electrically connected to the human body, and remaining two electrodes are not electrically connected to the human body, the communication between the two groups of electrodes may be implemented. As shown in A of FIG. 7, it is assumed that an electrode M1 and an electrode N1 are electrodes that are not electrically connected to the human body, an electrode M2 and an electrode N2 are electrodes that are electrically connected to the human body, a capacitor C9 is an equivalent capacitor between the electrode M2 and the human body, a capacitor C10 is an equivalent capacitor between the electrode N2 and the human body, a capacitor C11 is an equivalent capacitor between the electrode M1 and the human body, a capacitor C12 is an equivalent capacitor between the electrode N1 and the human body, and a capacitor C13 is an equivalent capacitor between the human body and the ground terminal GND. For capacitors C1-C6, refer to the description of FIG. 6. Details are not described herein again. As shown in B of FIG. 7, after simulation, when a frequency of an alternating current signal is 15 MHz, and when one electrode is taken from each of the two groups of electrodes to be electrically connected to a human body, signal attenuation of the alternating current signal transmitted between the two groups of electrodes is -45 db, that is, signal attenuation may decrease by 85 db, which may be met by a detection capability of common hardware for the alternating current signal, so that the alternating current signal can be transmitted between the two groups of electrodes. This is a basic principle of the human body communication.

In addition, after simulation, larger capacitance values of the capacitors C1, C4, C9, and C10 in FIG. 7 indicate better human body communication performance. For example, if signal attenuation of the human body communication is very small, the human body communication is not easy to disconnect. Smaller capacitance values of the capacitors C1, C4, C9, and C10 indicate poorer human body communication performance. For example, if signal attenuation of the human body communication is very large, the human body communication is disconnected. Based on analysis in B of FIG. 5, because the electrode M2 and the electrode N2 are electrically connected to the human body, a capacitance C9 and a capacitance C10 are large. However, because the electrode M1 and the electrode N1 are not electrically connected to the human body, a capacitance C1 and a capacitance C4 are small, which becomes a key factor restricting human body communication performance.

Because a capacitance value of a capacitor is related to an area of an electrode and a dielectric constant of a dielectric coupled to the electrode, a larger area of the electrode or a larger dielectric constant of the dielectric coupled to the electrode indicates a larger capacitance value of the capacitor. Therefore, when a human body communication apparatus is designed, the equivalent capacitance C1 between the electrode N1 and the ground terminal and the equivalent capacitance C4 between the electrode N1 and the ground terminal may be specifically increased as much as possible in the following three manners: Areas of the electrode M1 and the electrode N1 may be increased, the dielectric may be added to a side that is of the electrode M1 and that is away from the electrode M2 and the dielectric may be added to a side that is of the electrode N1 and that is away from the electrode N2, or the dielectric constant of the foregoing dielectric may be increased (for example, a high dielectric constant material is used).

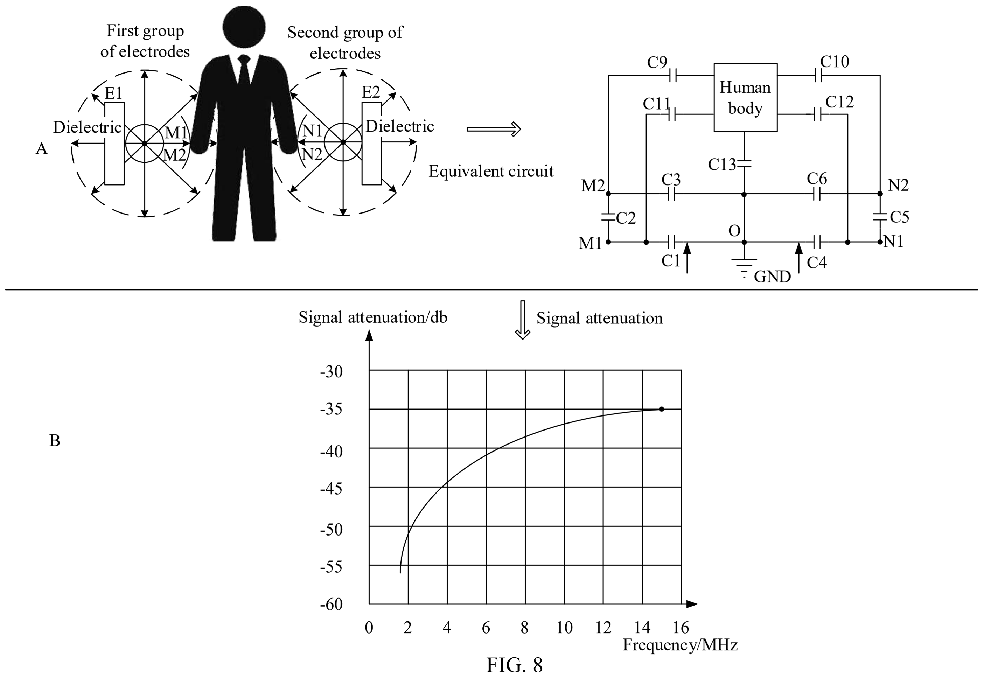

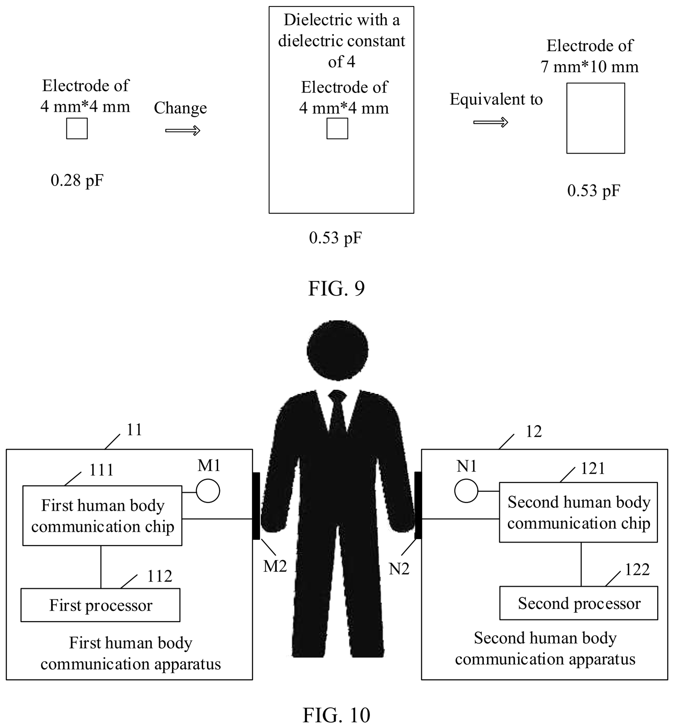

As shown in A of FIG. 8, a dielectric E1 is added to the side that is of the electrode M1 and that is away from the electrode M2, which is equivalent to adding the dielectric between the electrode M1 and the ground terminal GND on the basis of FIG. 7, to increase the equivalent capacitance C1 between the electrode M1 and the ground terminal GND. A larger dielectric constant of the dielectric E1 indicates a larger equivalent capacitance C1 between the electrode M1 and the ground terminal GND and better human body communication performance. Similarly, a dielectric E2 is added to the side that is of the electrode N1 and that is away from the electrode N2, which is equivalent to adding the dielectric between the electrode N1 and the ground terminal GND on the basis of FIG. 7, to increase the equivalent capacitance C4 between the electrode N1 and the ground terminal GND. A larger dielectric constant of the dielectric E2 indicates a larger equivalent capacitance C4 between the electrode N1 and the ground terminal GND and better human body communication performance. As shown in B of FIG. 8, after simulation, if the dielectric is added to the side that is of the electrode M1 and that is away from the electrode M2, and the dielectric is added to the side that is of the electrode N1 and that is away from the electrode N2, then when the frequency of the alternating current signal is 15 MHz, signal attenuation of the alternating current signal transmitted between the two groups of electrodes after the dielectric is added is -35 db. Compared with signal attenuation being -45 db (corresponding to B of FIG. 7) when the dielectric is not added, signal attenuation further decreases by 10 db. As shown in FIG. 9, after simulation, an equivalent capacitance of a single electrode of 4 mm * 4 mm is 0.28 pF. If a dielectric with a dielectric constant of 4 is added to the electrode, the equivalent capacitance of the electrode may be changed to 0.53 pF (approximately doubled), which is equivalent to that an area of the electrode is 7 mm * 10 mm, that is, the area of the electrode is increased by 4.3 times.

As shown in FIG. 10, based on the foregoing principle of human body communication, an embodiment of this application provides a human body communication system, including: a first human body communication apparatus 11 and a second human body communication apparatus 12. After the first human body communication apparatus 11 and the second human body communication apparatus 12 are electrically connected to a human body, bidirectional human body communication may be performed between the first human body communication apparatus 11 and the second human body communication apparatus 12 through the human body. The first human body communication apparatus 11 and the second human body communication apparatus 12 each may be an electronic device that can perform human body communication. For example, the first human body communication apparatus 11 may be a mobile phone, and the second human body communication apparatus 12 may be a smart watch, a virtual reality device, or the like.

The first human body communication apparatus 11 includes a first human body communication chip 111, and a first processor 112, an electrode M1, and an electrode M2 that are electrically connected to the first human body communication chip 111. The second human body communication apparatus 12 includes a second human body communication chip 121, and a second processor 122, an electrode N1, and an electrode N2 that are electrically connected to the second human body communication chip 121. The electrode M1 and the electrode N1 are electrodes (hereinafter referred to as first electrodes) that are not electrically connected to the human body, and the electrode M2 and the electrode N2 are electrodes (hereinafter referred to as second electrodes) that are electrically connected to the human body. For the electrode M1, the electrode M2, the electrode N1, and the electrode N2, refer to the foregoing description. It should be noted that in this embodiment of this application, electrical connections between the electrodes and the human body include a direct electrical connection and an electrical connection by using a conductor. For a same human body communication apparatus, the human body communication chip may obtain data from the processor, and transmit an alternating current signal corresponding to the data through the two electrically connected electrodes, or the human body communication chip may receive an alternating current signal through the two electrically connected electrodes, and send data corresponding to the alternating current signal to the processor.

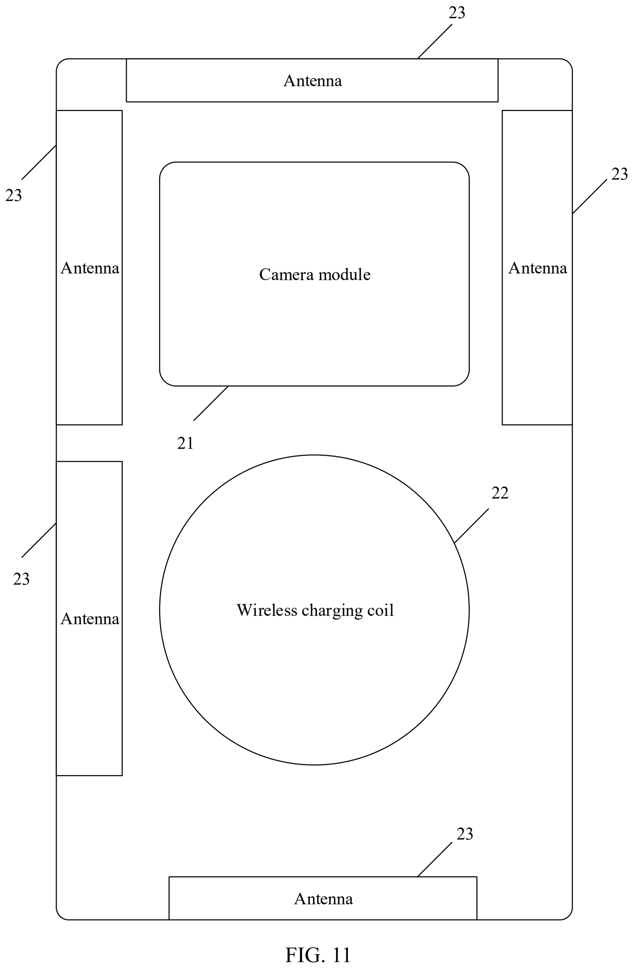

As described in FIG. 7, to improve human body communication performance, when the human body communication apparatus is designed, an equivalent capacitance C1 between the electrode N1 and a ground terminal and an equivalent capacitance C4 between the electrode N1 and the ground terminal may be specifically increased as much as possible in three manners. For the electronic device such as the mobile phone or the smart watch, internal storage space is very limited, and there are a large quantity of metal components. When the metal components are extremely close to each other, a coupling capacitance between the metal components increases, which has a great impact on the human body communication performance. Therefore, an area of the electrode is limited. For example, as shown in FIG. 11, the human body communication apparatus is a mobile phone. A wireless charging coil 22, an antenna 23, a metal component in a camera module 21, and the like each occupy a large area, resulting in difficulty in increasing an area of the electrode configured for human body communication, and affecting the human body communication performance. Therefore, in this application, the equivalent capacitance C1 between the electrode M1 and the ground terminal may be increased by adding a dielectric (especially, made of a high dielectric constant material) to a side that is of the electrode M1 and that is away from the electrode M2, or the equivalent capacitance C4 between the electrode N1 and the ground terminal may be increased by adding a dielectric (especially, made of a high dielectric constant material) to a side that is of the electrode N1 and that is away from the electrode N2, thereby improving the human body communication performance of the human body communication apparatus.

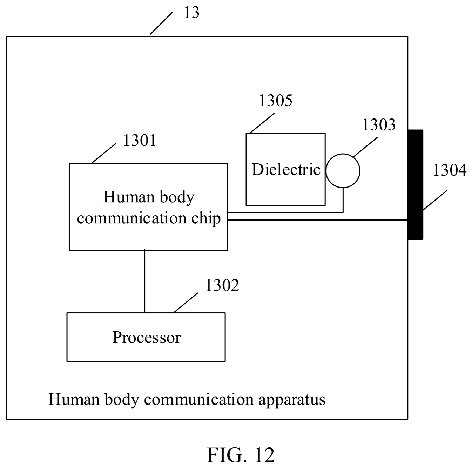

As shown in FIG. 12, a human body communication apparatus 13 (corresponding to the foregoing first human body communication apparatus 11 or the foregoing second human body communication apparatus 12) provided in an embodiment of this application includes: a human body communication chip 1301 (corresponding to the foregoing first human body communication chip 111 or the foregoing second human body communication chip 121), a processor 1302 (corresponding to the foregoing first processor 112 or the foregoing second processor 122), a first electrode 1303 (corresponding to the foregoing electrode M1 and electrode N1), and a second electrode 1304 (corresponding to the foregoing electrode M2 and electrode N2). The human body communication chip 1301 and the processor 1302 are disposed on a printed circuit board (printed circuit board, PCB). The human body communication chip 1301 is electrically connected to the first electrode 1303 and the second electrode 1304 separately. The first electrode 1303 is not electrically connected to a human body, and the second electrode 1304 is configured to be electrically connected to the human body. In addition, a dielectric 1305 is disposed on a side that is of the first electrode 1303 and that is away from the second electrode 1304, to increase an equivalent capacitance between the first electrode 1303 and a ground terminal. The dielectric 1305 may be in contact or not in contact with the first electrode 1303. For example, the dielectric 1305 is covered on a surface of the side that is of the first electrode 1303 and that is away from the second electrode 1304. The dielectric 1305 may alternatively be disposed on a side that is of one or more first electrodes 1303 and that is away from the second electrode 1304.

The dielectric 1305 may be made of a high dielectric constant material. For example, a dielectric constant of the dielectric 1305 is greater than 4, and the dielectric 1305 may be made of one of the following materials: alumina ceramic, zirconia ceramic, polytetrafluoroethylene, polyimide, and the like. In this way, a size of the first electrode 1303 may be made very small (for example, less than 1 cm * 1 cm), to prevent mutual interference with another metal.

The dielectric 1305 may be tightly adhered to the first electrode 1303, to increase the equivalent capacitance between the first electrode 1303 and the ground terminal. An area of the dielectric 1305 may be greater than an area of the first electrode 1303. Within a specific range, a larger area of the dielectric 1305 indicates a larger equivalent capacitance between the first electrode 1303 and the ground terminal.

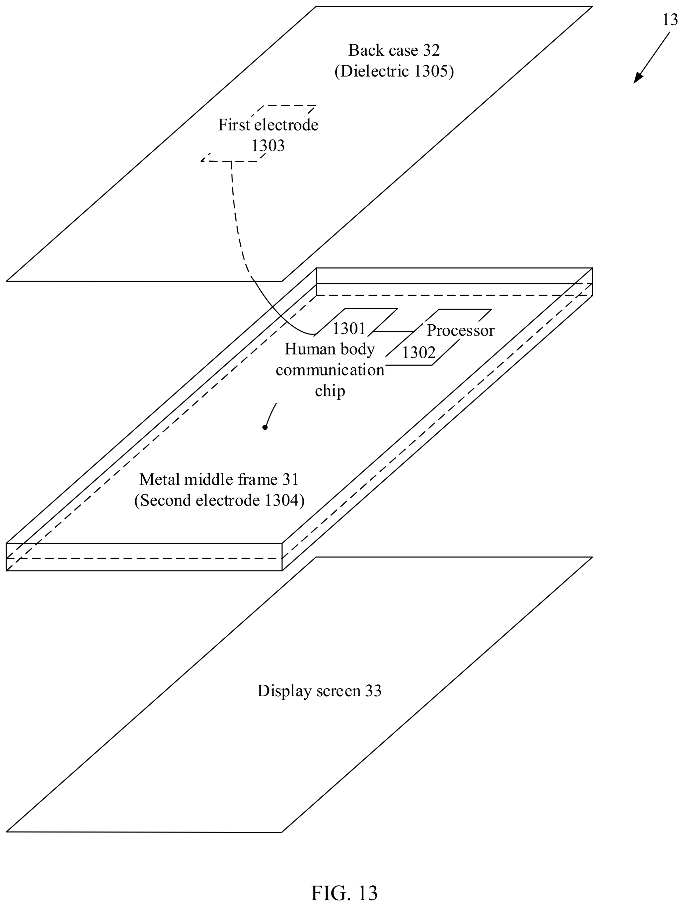

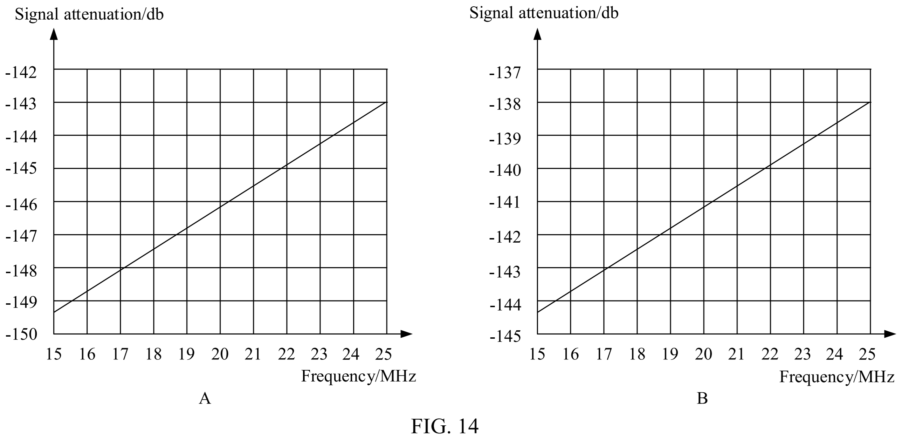

For example, as shown in FIG. 13, the human body communication apparatus 13 is a mobile phone. The human body communication apparatus 13 includes a metal middle frame 31, a back case 32, and a display screen 33. The second electrode 1304 may be the metal middle frame 31 of the human body communication apparatus 13 or another metal (for example, a metal frame) exposed to the exterior of an electronic device. For the human body communication apparatus such as the mobile phone, the metal middle frame 31 is inherent, and an additionally disposed metal component does not need to be added, so that an internal space can be saved. The human body communication chip 1301 and the processor 1302 are disposed on the metal middle frame 31. The first electrode 1303 may be an additionally disposed metal component, may be an antenna branch, or may be a metal component of a camera module. For the human body communication apparatus such as the mobile phone, the antenna branch or the camera module is inherent, and therefore no additional metal component is added, so that the internal space and material costs can be saved. The dielectric 1305 may be an original or additionally disposed non-metallic component of the electronic device. Alternatively, the dielectric 1305 may be the back case 32 of the human body communication apparatus 13, so that the first electrode 1303 can be disposed on an inner side of the back case 32 without being electrically connected to the human body. For the human body communication apparatus such as the mobile phone, the back case 32 is inherent, and an additionally disposed dielectric does not need to be added, so that the internal space can be saved. In addition, compared with directly exposing the first electrode 1303 to the outside for contact with the human body, disposing the first electrode 1303 on the inner side of the back case 32 may prevent a huge transmission loss. As shown in FIG. 14, after quasi-actual environment simulation, in B of FIG. 14, a rear case (the dielectric 1305) is added to the side that is of the first electrode 1303 and that is away from the second electrode 1304, which may make signal attenuation at various frequencies decrease by about 5 db on average, compared with A of FIG. 14 in which no rear case is added.

In addition, the human body communication apparatus includes an electrode that is electrically connected to the human body and an electrode that is not electrically connected to the human body, and the human body communication apparatus performs human body communication through the two electrodes. The human body communication performance is degraded when the human body is close to the electrode that is not electrically connected to the human body. In addition, a shorter distance between the human body and the electrode results in more obvious degradation in the human body communication performance. As described in FIG. 5, when the human body is close to the electrode M1, a capacitance is also generated between the electrode M1 and the human body. As the human body is gradually close to the electrode M1, an equivalent capacitance C1 between the electrode M1 and the ground terminal decreases, and an equivalent capacitance C2 between the human body and the electrode M1 increases. In addition, as described in FIG. 7, a decrease in the capacitance C1 may degrade the human body communication performance.

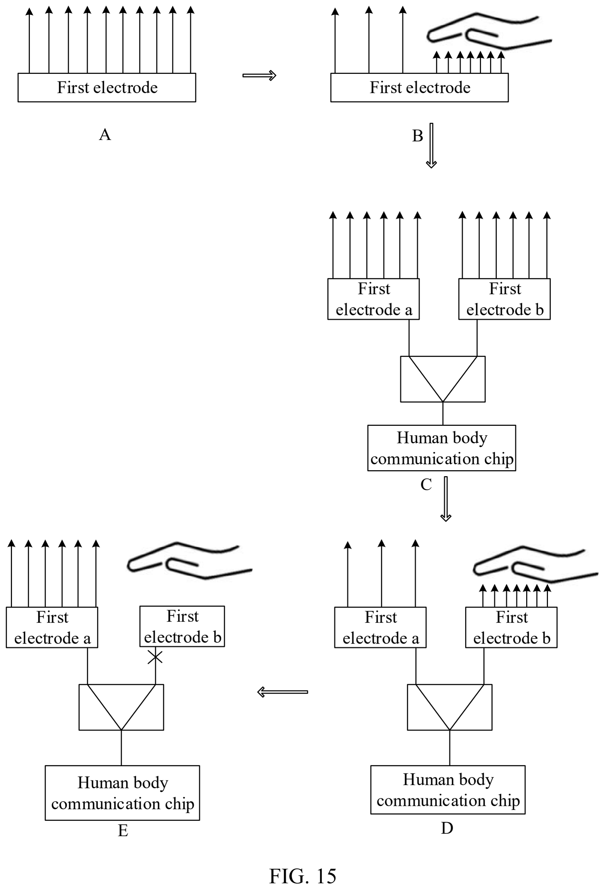

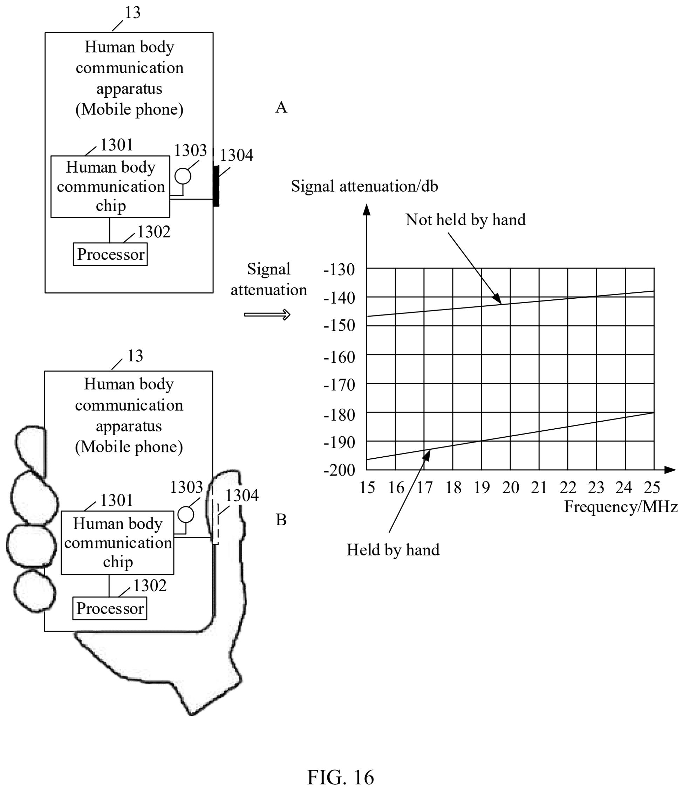

Similarly, as shown in A and B of FIG. 15, the electrode M1 is the foregoing first electrode that is not electrically connected to the human body in the human body communication. When the human body is close to the first electrode, an equivalent capacitance between the first electrode and the ground terminal also decreases due to an attractive effect of the human body on an electric field, resulting in degradation in the human body communication performance. As shown in FIG. 16, when a single electrode is used, a user holding a mobile phone in hand (corresponding to B of FIG. 16) may cause signal attenuation at various frequencies to be increased by about 50 db on average compared with the user not holding the mobile phone in hand (corresponding to B of FIG. 16).

To solve the foregoing problem, as shown in C of FIG. 15, it is assumed that there are a plurality of first electrodes (for example, a first electrode a and a first electrode b), and the plurality of first electrodes are electrically connected to the human body communication chip in parallel by using a multi-way switch. When the human body is not close to the plurality of first electrodes, the human body communication chip or the processor controls the multi-way switch to conductively connect all the plurality of first electrodes to the human body communication chip, that is, the plurality of first electrodes work in parallel to increase the equivalent capacitance C1. As shown in D of FIG. 15, when the human body is close to a specific first electrode (for example, the first electrode b), if the multi-way switch still conductively connects the plurality of first electrodes to the human body communication chip, the plurality of first electrodes are still equivalent to one electrode, and the human body still has an attractive effect on an electric field of the plurality of first electrodes. As shown in E of FIG. 15, when the human body is close to a specific first electrode (for example, the first electrode b), the human body communication chip or the processor controls the multi-way switch to disconnect an electrical connection between the human body communication chip and the first electrode (for example, the first electrode b), so that an impact of the human body on other first electrodes (for example, the first electrode a) can be reduced, and the equivalent capacitance C1 is not decreased much, thereby reducing an impact on the human body communication performance when the human body is close to the first electrode.

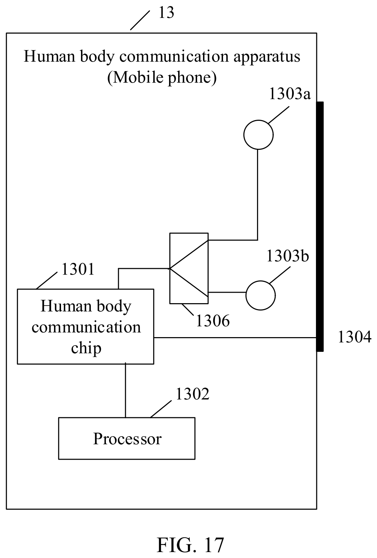

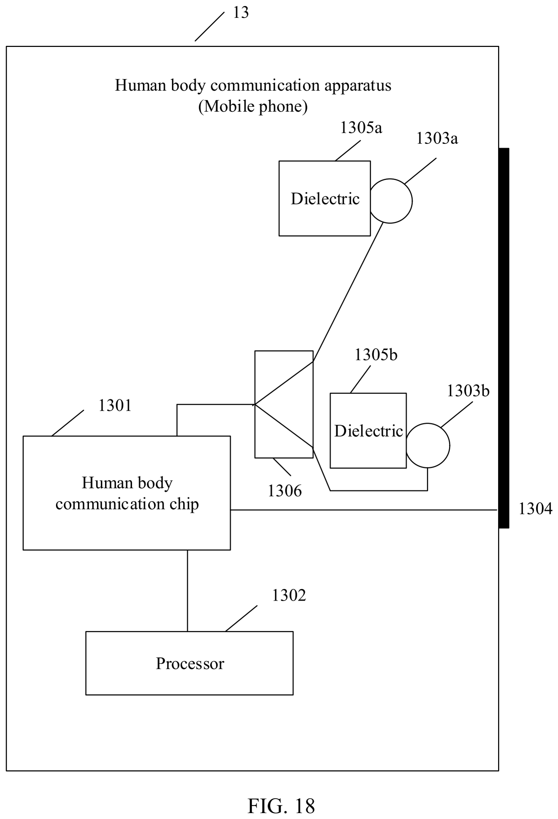

Specifically, as shown in FIG. 17 and FIG. 18, an embodiment of this application provides another human body communication apparatus 13, including: a human body communication chip 1301 (corresponding to the foregoing first human body communication chip 111 or the foregoing second human body communication chip 121), a processor 1302 (corresponding to the foregoing first processor 112 or the foregoing second processor 122), a multi-way switch 1306, a second electrode 1304 (corresponding to the foregoing electrodes M2 and N2), and a plurality of first electrodes (such as 1303a and 1303b) (corresponding to the foregoing electrode M1 and electrode N1). An area of the second electrode 1304 is greater than an area of the plurality of first electrodes, enabling capacitive coupling between the second electrode 1304 and all the plurality of first electrodes. The plurality of first electrodes may be disposed in different regions of the human body communication apparatus 13. In this way, the plurality of first electrodes are prevented from being simultaneously affected by the human body, and therefore human body communication performance is prevented from being degraded. For example, the plurality of first electrodes may be separately located at a top and a middle part of the human body communication apparatus 13.

Optionally, as shown in FIG. 18, the human body communication apparatus 13 further includes a dielectric (for example, 1305a or 1305b) disposed on a side that is of the first electrode and that is away from the second electrode 1304. The plurality of first electrodes may be jointly coupled to a same dielectric, each first electrode may be coupled to a dielectric (for example, the first electrode 1303a is coupled to the dielectric 1305a and the first electrode 1303b is coupled to the dielectric 1305b), some of the first electrodes may be coupled to the dielectric while remaining first electrodes are not coupled to any dielectric, or the like. For other content of the human body communication chip 1301, the first electrode, the second electrode 1304, and the dielectric, refer to the foregoing description. Details are not described herein again.

The human body communication chip 1301 is connected to the plurality of first electrodes 1303 by using the multi-way switch 1306. The human body communication chip 1301 or the processor 1302 may control the multi-way switch 1306 to conductively connect the human body communication chip 1301 to at least one of the plurality of first electrodes 1303, to perform a control method for a human body communication apparatus in this application.

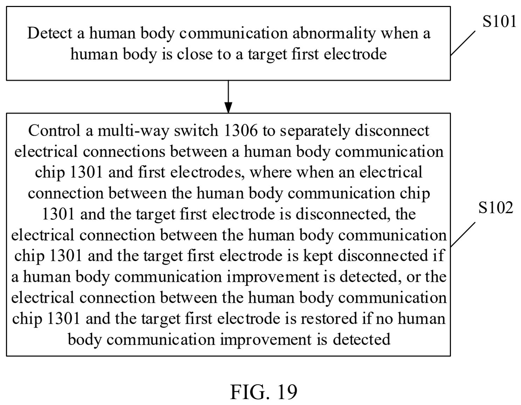

As shown in FIG. 19, a control method for a human body communication apparatus provided in this application includes the following steps.

S101. Detect a human body communication abnormality when a human body is close to a target first electrode.

The target first electrode is at least one of a plurality of first electrodes. Under a default condition, a multi-way switch 1306 conductively connects the plurality of first electrodes to a human body communication chip 1301. The human body communication abnormality includes: signal attenuation of human body communication increases by a specific magnitude, human body communication is disconnected, or the like. "Signal attenuation of human body communication increases by a specific magnitude" means that an average power of an alternating current signal received by the human body communication chip in a first time period is a first power, an average power of an alternating current signal received by the human body communication chip in a subsequent second time period is a second power, and a difference between the first power and the second power is greater than a first threshold. "Human body communication is disconnected" means that no alternating current signal is received by the human body communication chip 1301.

S102. Control a multi-way switch 1306 to separately disconnect electrical connections between a human body communication chip 1301 and first electrodes, where when an electrical connection between the human body communication chip 1301 and the target first electrode is disconnected, the electrical connection between the human body communication chip 1301 and the target first electrode is kept disconnected if a human body communication improvement is detected, or the electrical connection between the human body communication chip 1301 and the target first electrode is restored if no human body communication improvement is detected.

The human body communication improvement includes: signal attenuation of human body communication decreases by a specific magnitude, human body communication is restored, or the like. "Signal attenuation of human body communication increases by a specific magnitude" means that an average power of an alternating current signal received by the human body communication chip in a third time period is a third power, an average power of an alternating current signal received by the human body communication chip in a subsequent fourth time period is a fourth power, and a difference between the fourth power and the third power is greater than a second threshold. The second threshold may be the same as or different from the first threshold.

"Human body communication is restored" means that the alternating current signal is received again by the human body communication chip 1301, or the like.

If the human body communication improvement is detected after the target first electrode is disconnected, it may be determined that the human body has a great impact on the target first electrode, and therefore, the electrical connection between the human body communication chip 1301 and the target first electrode is disconnected. Otherwise (human body communication performance is not improved), it may be determined that the human body has a small impact on the target first electrode. Therefore, the electrical connection between the human body communication chip 1301 and the target first electrode is restored, to increase an equivalent capacitance between a first electrode and a ground terminal and improve the human body communication performance.

Then, electrical connections between the human body communication chip 1301 and other first electrodes continue to be disconnected until all first electrodes 1032 are traversed. At this time, it means that all first electrodes 1032 that are greatly affected by the human body have been disconnected. In this way, an equivalent capacitance C1 between the first electrodes 1032 and the ground terminal is not decreased much, thereby reducing an impact on the human body communication performance when the human body is close to the first electrodes 1032.

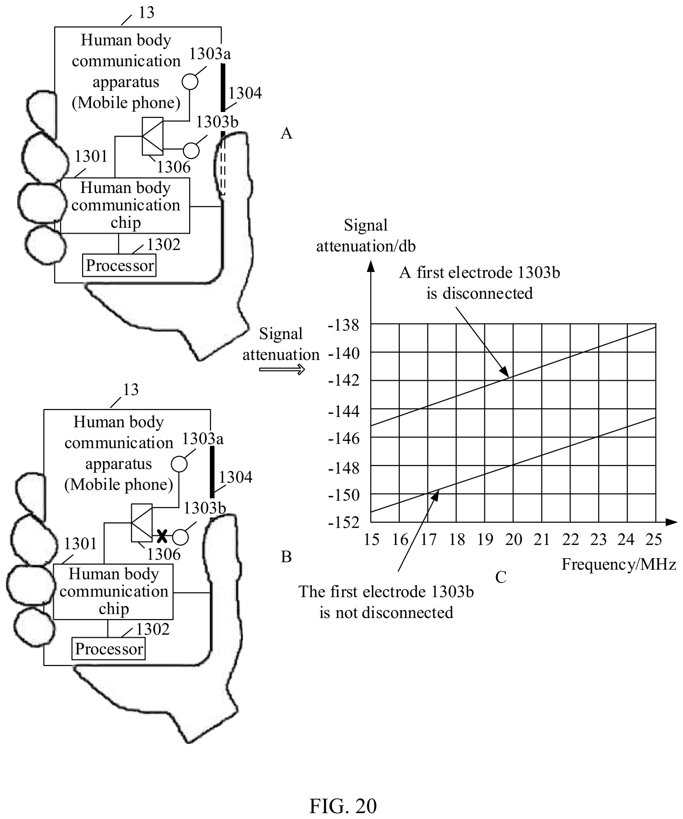

For example, as shown in A of FIG. 20, if no human body communication improvement is detected when an electrical connection between the human body communication chip 1301 and a first electrode 1303a is disconnected, but a human body communication improvement is detected when an electrical connection between the human body communication chip 1301 and a first electrode 1303b is disconnected, the target first electrode may be determined to be the first electrode 1303b. As shown in A of FIG. 20, then the electrical connection between the human body communication chip 1301 and the first electrode 1303b may be disconnected, and the electrical connection between the human body communication chip 1301 and the first electrode 1303a is maintained. As shown in C of FIG. 20, when a user holds a mobile phone by hand, disconnecting the first electrode 1303b (corresponding to B of FIG. 20) that affects the human body communication performance, compared with not disconnecting the first electrode 1303b (corresponding to A of FIG. 20), may make signal attenuation at various frequencies decrease by about 6 db on average.

According to the human body communication apparatus and system and the control method provided in the embodiments of this application, the plurality of first electrodes that are not electrically connected to the human body are electrically connected to the human body communication chip by using the multi-way switch. The human body communication chip or the processor may control the multi-way switch to disconnect the first electrode that is in the plurality of first electrodes and that is greatly affected due to proximity to the human body, to prevent the first electrode from affecting other first electrodes, thereby preventing the human body communication performance from being degraded when the human body is close to an electrode that is not electrically connected to the human body in the human body communication apparatus.

An embodiment of this application further provides a computer-readable storage medium, and the computer-readable storage medium includes instructions. When the instructions are run on the foregoing human body communication apparatus, the human body communication apparatus is enabled to perform various steps in the foregoing method embodiment, for example, to perform the method shown in FIG. 19.

An embodiment of this application further provides a computer program product including instructions. When the instructions are run on the foregoing human body communication apparatus, the human body communication apparatus is enabled to perform various steps in the foregoing method embodiment, for example, to perform the method shown in FIG. 19.

For technical effects of the computer-readable storage medium and the computer program product, refer to the technical effects of the foregoing method embodiment.

A person of ordinary skill in the art may be aware that the example modules and algorithm steps described with reference to the embodiments disclosed in this specification can be implemented by using electronic hardware or a combination of computer software and electronic hardware. Whether these functions are implemented in a hardware or software manner depends on specific applications and design constraints of the technical solutions. A person skilled in the art may use different methods to implement the described functions for each specific application, but it should not be considered that such an implementation goes beyond the scope of this application. A person skilled in the art may clearly understand that for ease and brevity of description, for a specific operation process of the system, apparatus, and module described above, refer to a corresponding process in the foregoing method embodiment. Details are not described herein again.

In the several embodiments provided in this application, it should be understood that the disclosed system, device, and method may be implemented in another manner. For example, the described device embodiment is merely an example. For example, division of the modules is merely logical function division and there may be other division manners during actual implementation. For example, a plurality of modules or components may be combined or integrated into another device, or some features may be ignored or not performed. In addition, the displayed or discussed mutual couplings or direct couplings or communication connections may be implemented through some interfaces. The indirect couplings or communication connections between the devices or modules may be implemented in an electrical form, a mechanical from, or another form.

The modules described as separate components may or may not be physically separate, and components displayed as modules may or may not be physical modules, may be located in one device, or may be distributed on a plurality of devices. Some or all of the modules may be selected based on an actual requirement, to achieve the objectives of the solutions in the embodiments.

In addition, functional modules in the embodiments of this application may be integrated into one device, or each of the modules may exist alone physically, or two or more modules may be integrated into one device.

All or some of the foregoing embodiments may be implemented by using software, hardware, firmware, or any combination thereof. When being implemented by using a software program, all or some of the foregoing embodiments may be implemented in a form of a computer program product. The computer program product includes one or more computer instructions. When the computer program instructions are loaded and executed on a computer, all or some of the procedures or functions in embodiments of this application are generated. The computer may be a general-purpose computer, a dedicated computer, a computer network, or another programmable apparatus. The computer instructions may be stored in a computer-readable storage medium or transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) manner or a wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

The foregoing descriptions are merely specific implementations of this application, but are not intended to limit the protection scope of this application. Any person skilled in the art can readily figure out variations or replacements within the technical scope disclosed in this application, and these variations or replacements shall fall within the protection scope of this application. Therefore, the protection scope of this application shall be subject to the protection scope of the claims.

## Claims

1. A human body communication apparatus, comprising: a human body communication chip, a first electrode, a second electrode, and a dielectric, wherein the human body communication chip is electrically connected to the first electrode and the second electrode separately, the dielectric is disposed on a side that is of the first electrode and that is away from the second electrode, the first electrode is not electrically connected to a human body, and the second electrode is configured to be electrically connected to the human body.

2. The apparatus according to claim 1, further comprising: a processor and a multi-way switch, wherein there are a plurality of first electrodes, and the plurality of first electrodes are electrically connected in parallel to the human body communication chip by using the multi-way switch; and
the human body communication chip or the processor is configured to control the multi-way switch to conductively connect the human body communication chip to at least one of the plurality of first electrodes.

3. The apparatus according to claim 2, wherein the human body communication chip or the processor is specifically configured to:

   detect a human body communication abnormality; and
   control the multi-way switch to separately disconnect electrical connections between the human body communication chip and each of the first electrodes, wherein when an electrical connection between the human body communication chip and a target first electrode is disconnected, the electrical connection between the human body communication chip and the target first electrode is kept disconnected if a human body communication improvement is detected or the electrical connection between the human body communication chip and the target first electrode is restored if no human body communication improvement is detected.

4. The apparatus according to claim 3, wherein the human body communication abnormality comprises: human body communication is disconnected; or an average power of an alternating current signal received by the human body communication chip in a first time period is a first power, an average power of an alternating current signal received by the human body communication chip in a subsequent second time period is a second power, and a difference between the first power and the second power is greater than a first threshold.

5. The apparatus according to claim 3 or 4, wherein the human body communication improvement comprises: the human body communication is restored; or an average power of an alternating current signal received by the human body communication chip in a third time period is a third power, an average power of an alternating current signal received by the human body communication chip in a subsequent fourth time period is a fourth power, and a difference between the fourth power and the third power is greater than a second threshold.

6. The apparatus according to any one of claims 2-5, wherein the plurality of first electrodes are located in different regions of the human body communication apparatus.

7. The apparatus according to any one of claims 1-6, wherein the dielectric is a back case of the human body communication apparatus, and the first electrode is disposed on an inner side of the back case.

8. The apparatus according to any one of claims 1-7, wherein the dielectric is made of one of the following materials: alumina ceramic, zirconia ceramic, polytetrafluoroethylene, and polyimide.

9. The apparatus according to any one of claims 1-8, wherein a dielectric constant of the dielectric is greater than 4.

10. The apparatus according to any one of claims 1-9, wherein an area of the dielectric is greater than an area of the first electrode.

11. The apparatus according to any one of claims 1-10, wherein the first electrode is an antenna branch or the first electrode is a metal component of a camera module.

12. The apparatus according to any one of claims 1-11, wherein the second electrode is a metal middle frame of the human body communication apparatus.

13. A human body communication system, comprising a first human body communication apparatus and a second human body communication apparatus, wherein the first human body communication apparatus and the second human body communication apparatus perform human body communication through a human body, and the first human body communication apparatus or the second human body communication apparatus is the human body communication apparatus according to any one of claims 1-12.

14. A control method for a human body communication apparatus, applied to the human body communication apparatus according to any one of claims 1-12, wherein the method comprises:

detecting a human body communication abnormality; and
controlling the multi-way switch to separately disconnect electrical connections between the human body communication chip and each of the first electrodes, wherein when an electrical connection between the human body communication chip and a target first electrode is disconnected, the electrical connection between the human body communication chip and the target first electrode is kept disconnected if a human body communication improvement is detected, or the electrical connection between the human body communication chip and the target first electrode is restored if no human body communication improvement is detected; and the first electrodes are not electrically connected to a human body.

15. The method according to claim 14, wherein the human body communication abnormality comprises: human body communication is disconnected; or an average power of an alternating current signal received by the human body communication chip in a first time period is a first power, an average power of an alternating current signal received by the human body communication chip in a subsequent second time period is a second power, and a difference between the first power and the second power is greater than a first threshold.

16. The method according to claim 14 or 15, wherein the human body communication improvement comprises: the human body communication is restored; or an average power of an alternating current signal received by the human body communication chip in a third time period is a third power, an average power of an alternating current signal received by the human body communication chip in a subsequent fourth time period is a fourth power, and a difference between the fourth power and the third power is greater than a second threshold.

FIG. 1

FIG. 2

FIG. 3

FIG. 4

FIG. 5

FIG. 6

FIG. 7

FIG. 8

Electrode of
4 mm*4 mm
▢

Change
⟹

Dielectric with a
dielectric constant
of 4
Electrode of
4 mm*4 mm
▢

Equivalent to
⟹

Electrode of
7 mm*10 mm

0.28 pF

0.53 pF

0.53 pF

FIG. 9

11

111

M1

First human body
communication chip

112

First processor

First human body
communication apparatus

M2

N2

12

N1

121

Second human body
communication chip

122

Second processor

Second human body
communication apparatus

FIG. 10

Antenna

23

23

Antenna

23

Camera module

Antenna

21

22

Wireless charging coil

23

Antenna

23

Antenna

FIG. 11

13

1305

1303

1301

Dielectric

1304

Human body
communication chip

Processor

1302

Human body communication apparatus

FIG. 12

13

Back case 32
(Dielectric 1305)

First electrode
1303

1301    Processor
Human body 1302
communication
chip

Metal middle frame 31
(Second electrode 1304)

Display screen 33

FIG. 13

FIG. 14

First electrode

A

First electrode

B

First
electrode a

First
electrode b

Human body
communication chip

C

First
electrode a

First
electrode b

Human body
communication chip

E

First
electrode a

First
electrode b

Human body
communication chip

D

FIG. 15

FIG. 16

13

Human body communication apparatus
(Mobile phone)

1303a

1303b

1301

Human body
communication
chip

1306

1304

1302

Processor

FIG. 17

13

Human body communication apparatus
(Mobile phone)

1305a

1303a

Dielectric

1305b

1303b

1301

Dielectric

Human body
communication chip

1306

1304

1302

Processor

FIG. 18

Detect a human body communication abnormality when a
human body is close to a target first electrode

S101

Control a multi-way switch 1306 to separately disconnect
electrical connections between a human body communication
chip 1301 and first electrodes, where when an electrical
connection between the human body communication chip
1301 and the target first electrode is disconnected, the
electrical connection between the human body communication
chip 1301 and the target first electrode is kept disconnected if
a human body communication improvement is detected, or the
electrical connection between the human body communication
chip 1301 and the target first electrode is restored if no human
body communication improvement is detected

S102

FIG. 19

FIG. 20

## INTERNATIONAL SEARCH REPORT

| International application No. |
|---|
| **PCT/CN2024/111409** |

### A. CLASSIFICATION OF SUBJECT MATTER

H04B 13/00(2006.01)i

According to International Patent Classification (IPC) or to both national classification and IPC

### B. FIELDS SEARCHED

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

CNTXT, ENTXT, CNKI, ENTXTC, DWPI, VCN, VEN: 人体通信 芯片 电极 电容 电介质 增大 功率 开关 human body communication chip dielectric electrode capacitance power increase switch

### C. DOCUMENTS CONSIDERED TO BE RELEVANT

| Category* | Citation of document, with indication, where appropriate, of the relevant passages | Relevant to claim No. |
|---|---|---|
| X | US 2012129449 A1 (KABUSHIKI KAISHA TOSHIBA) 24 May 2012 (2012-05-24) description, paragraphs 3-74 | 1, 13 |
| A | CN 109257111 A (BESTECHNIC (SHANGHAI) CO., LTD.) 22 January 2019 (2019-01-22) entire document | 1-16 |
| A | CN 111585661 A (INSTITUTE OF AUTOMATION, CHINESE ACADEMY OF SCIENCES) 25 August 2020 (2020-08-25) entire document | 1-16 |
| A | CN 113285766 A (GUANGDONG OPPO MOBILE COMMUNICATIONS CORP., LTD.) 20 August 2021 (2021-08-20) entire document | 1-16 |
| A | CN 212031757 U (SHENZHEN GOODIX TECHNOLOGY CO., LTD.) 27 November 2020 (2020-11-27) entire document | 1-16 |
| A | JP 2023051089 A (TOSHIBA INFORMATION SYSTEMS JAPAN CORP.) 11 April 2023 (2023-04-11) entire document | 1-16 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 November 2024** | **15 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/111409**

| Patent document cited in search report | | | Publication date (day/month/year) | Patent family member(s) | | | Publication date (day/month/year) |
|---|---|---|---|---|---|---|---|
| US | 2012129449 | A1 | 24 May 2012 | US | 2014057562 | A1 | 27 February 2014 |
| | | | | US | 9014629 | B2 | 21 April 2015 |
| | | | | JP | 2012109882 | A | 07 June 2012 |
| | | | | US | 8594564 | B2 | 26 November 2013 |
| | | | | CN | 102480326 | A | 30 May 2012 |
| CN | 109257111 | A | 22 January 2019 | US | 2020107126 | A1 | 02 April 2020 |
| | | | | US | 10623862 | B1 | 14 April 2020 |
| CN | 111585661 | A | 25 August 2020 | None | | | |
| CN | 113285766 | A | 20 August 2021 | None | | | |
| CN | 212031757 | U | 27 November 2020 | None | | | |
| JP | 2023051089 | A | 11 April 2023 | JP | 7311799 | B2 | 20 July 2023 |

Form PCT/ISA/210 (patent family annex) (July 2022)

**EP 4 746 317 A1**

**Patent documents cited in the description**

- CN 202311426306